# EUROPEAN PATENT SPECIFICATION

(11) **EP 1 545 822 B1**
(45) Date of publication and mention of the grant of the patent: **28.04.2010**
(21) Application number: 03722631.3
(22) Date of filing: 29.04.2003
(51) Int. Cl.: B23D 59/00, B23D 51/16, B23D 9/00, B23D 45/18, B23D 36/00, B26D 7/06

(54) **MACHINE TOOL AND METHOD FOR CONTROLLING OF A MACHINE TOOL**
WERKZEUGMASCHINE UND VERFAHREN ZUM STEUERN EINER WERKZEUGMASCHINE
MACHINE-OUTIL ET PROCEDE DE COMMANDE D'UNE MACHINE-OUTIL

(30) Priority: 29.04.2002 FI 20020806; 20.06.2002 FI 20021207
(43) Date of publication of application: 29.06.2005
(73) Proprietor: Jomeks Oy, 30300 Forssa (FI)
(72) Inventor: SUONTAUSTA, Ismo, FIN-30100 Forssa (FI); HAAVISTO, Timo, FIN-31300 Tammela (FI)
(74) Representative: Suominen, Kaisa Liisa
(86) International application number: PCT/FI2003/000333
(87) International publication number: WO 2003/092943

(56) References cited:
- DE-A1- 3 009 663
- DE-A1- 3 831 210
- GB-A- 1 321 011
- US-A- 3 858 473
- DATABASE WPI Week 197728, Derwent Publications Ltd., London, GB; Class A31, AN 1977-49982Y, XP002967328 & SU 536 976 A (PENZA BICYCLE WKS) 09 December 1976

## Description

The invention relates to a machine tool and to a method for controlling of a machine tool according to the preambles of the independent claims presented below.

Thereby a typical machine tool comprises means for conveying an object to be machined, and at least one machining means for machining the object. In this context a machine tool means a device with which the object to be machined can be machined using the machining means, for instance to cut it using a saw or some other suitable cutting device. Machining means also for instance drilling and milling. The material to be machined can be for instance wood, metal, plastics or corresponding material.

For instance elongated timber is cut with a machine, typically so that the object to be cut is conveyed to the cutting device using one or more conveying means, such as a belt conveyor. Generally these use different rubber belts having points of discontinuity in order to prevent damage of the belt in the machining range of the cutting device. It is further known to use for instance roller conveyors, whereby the cutting can be performed at the slots between the rolls in the roller conveyor. A problem with these known techniques is that in practice they can be applied only in such cutting devices where the object to be cut is stopped for the time when the cutting is made. Such cutting devices are relatively slow, so typically their production capacity remains rather low.

In order to overcome the above mentioned problem regarding the slowness the publication WO98/13165 presents a sawing device where the cutting is made without stopping the object to be cut. A sawing apparatus like that presented in the publication is essentially faster than such cutting devices, which stop the ob ject to be cut. The speed is particularly emphasised in such cutting where an elongated object is cut into relatively short pieces, such as in the furniture industry, the finger joint industry or the parquet industry. However, a problem rises in supporting the object to be cut within the machining area of the sawing device, which is moving during the cutting. According to the prior art, the sawing device presented in the publication WO98/13165 is therefore applicable only for the cutting of pieces with standard length from the object to be machined. This limitation is created particularly by that problem that the slots in the belt comprising mechanically jointed sections must be located at the machining area of the sawing device.

Therefore, an object of the present invention is to provide an improved machine tool and method for controlling the machine tool.

The object is then to provide a machine tool and a method for controlling a machine tool, which has a simple and durable structure and which enables a rapid machining of an object to be machined.

An object is particularly to provide a machine tool and a method for controlling a machine tool, which make it possible to cut from an elongated object pieces of a fixed length, and when desired, pieces of mutually different lengths, particularly advantageously without stopping the object to be cut during the cutting.

A further object is to provide a machine tool and a method for controlling a machine tool where the operation can be controlled on the basis of tolling information provided by a production planning system, an optimising system and/or an fault detection system external to the machine tool.

In order to attain the objects mentioned above a machine tool and a method for controlling a machine tool are characterised in what is defined in the characterising parts of the independent claims presented below.

Then in a typical machine tool according to the invention the means for conveying the object to be machined comprise at least one machining conveyor, with which the object to be machined is conveyed to the machining means, and at least one transfer conveyor, with which the object to be machined is conveyed to the machining conveyor. The machining conveyor comprises at least one recess arranged to act as the machining position. The position of the recess in the machining conveyor with respect to the object to be machined is arranged to be controlled by controlling the conveying speed of the machining conveyor and/or the transfer conveyor. A machining conveyor means in this context a conveyor formed by one or more conveyors, of which at least the conveyor supporting from below the object to be machined comprises one or more recesses arranged to act as the machining position. A recess arranged to act as the machining position means in this context a space arranged on the support surface of the conveyor where the machining means going through the object to be machined at least partly can be located during the machining of the object to be machined. Then, for instance when the object to be machined is cut off, the cutting machining means can go through the object to be machined and extend into said recess without damaging the conveyor. Thus the machining conveyor can be formed for instance by a slot conveyor comprising several parts connected to each other, the parts comprising at least one support surface for the object to be machined and which parts together form an endless belt. Then said recess is formed between the parts forming the conveyor. A transfer conveyor means in this context a conveyor formed by one or more conveyors, such as belts and/or rolls, which from at least one direction supports the object to be machined. Control of the conveying speed means changing the conveying speed of the machining conveyor and/or the transfer conveyor by increasing and/or reducing the speed. The recess in the machining conveyor can be aligned with the next machining position by controlling the conveying speed.

In an advantageous machine tool according to the present invention the machining means is a sawing device, which comprises one or more cutting blades, whereby the machine tool can be used to cut off elongated objects into shorter pieces. If the cutting is made using two or more circular blades, then the other blades can perform a return movement while one blade performs the sawing. This provides a rapid cutting, and it enables a high feeding speed of the object to be cut.

According to an advantageous embodiment of the present invention the machining means is arranged to be movable back and forth in the longitudinal direction of the object to be machined in order to machine the object while it is conveyed. Then the machining of the object can be made without stopping the object to be machined during the machining.

In an advantageous machine tool according to the present invention the position of the machining conveyor with respect to the object to be machined is arranged to be controlled by momentarily increasing the conveying speed of the machining conveyor and/or by momentarily reducing the conveying speed of the transfer conveyor. This prevents congestion in the conveyor section after the machining means and in the process after the machine tool. In some cases the control of the position of the machining conveyor can be made also in the opposite way, if the congestion does not cause problems to the operation of the machine tool.

In an advantageous machine tool according to the invention the transfer conveyor is arranged to support the object to be machined on at least two opposite sides. Then the transfer conveyor can be arranged to act as a conveyor, which provides the hold of the machined object, and which primarily determines the conveying speed of the machined object.

In an advantageous machine tool according to the invention at least one detector is arranged in connection with the machining conveyor in order to determine the position of the machining conveyor. The detector can accurately determine the position of the machining conveyor and its recesses. Said provision of detectors can be realised for instance by providing the machining conveyor with a servomotor comprising an absolute detector. In addition to said detector determining the position an additional detector can be advantageously used in order to secure the position of the recesses in the machining conveyor.

A preferred machine tool according to the present invention comprises means for determining at least one machining position on the machined object and/or for receiving information about the machining position of the object to be machined. The means for determining the machining position for the machined object enable an automatic detection of the machining position. The means for receiving information about the machining position of the object to be machined make it possible to connect the machine tool for instance to an external production management system.

An advantageous machine tool according to the present invention comprises means for controlling the speed of the machining conveyor and/or the transfer conveyor on the basis of information about the cutting position. The speed of the machining conveyor and/or of the transfer conveyor can be controlled by said means, without a control system external to the machine tool.

A typical method according to the present invention uses at least one machining conveyor as the means for conveying the object to be machined, which conveyor transports the machined object to the machining means, and which conveyor comprises at least one recess arranged to act as the machining position, and at least one transfer conveyor, with which the object to be machined is conveyed to the machining conveyor, and that the position of the recess in the machining conveyor regarding the machined object is arranged to be controlled by controlling the conveying speed of the machining conveyor and/or of the transfer conveyor. The position of the machining conveyor with respect to the machined object is advantageously controlled on the basis of information about the machining position for the machined object, so that the recess in the machining conveyor is positioned at the machining position of the machined object when the machining position is brought to the machining conveyor. If the machining position of the machined object is already located on the machining conveyor, when the position of the machining conveyor is controlled, then the position of the machining conveyor is controlled so that a machining conveyor recess closest to the machining position is brought to the machining position.

In an advantageous method according to the invention the transfer conveyor supports the object to be machined from at least two opposite sides, whereby the transfer conveyor provides the holding support acting on the machined object. Then the conveying speed of the machined object can be primarily determined by the transfer conveyor. Primary determination of the conveying speed by the transfer conveyor means that the speed of the object to be machined is determined on the basis of the conveying speed of the transfer conveyor as long as the holding action provided by the transfer conveyor acts on the machined object.

According to a preferred method according to the invention the speed of the machining conveyor is accelerated momentarily after the machining operation in order to align the recess on the basis of the next machining position. Then it is probable that the machined object still is subject to the action of the holding effect of the transfer conveyor, whereby any error in the last cutting can be minimised, even if the cutting would be performed after the holding effect of the transfer conveyor has ended.

The method according to the present invention will be typically realised with a computer software product, which can be directly stored into the main memory of a computer, or with a computer software product, which is stored on a means readable by a computer, whereby the computer software product contains the program code elements for performing the method according to the invention while said computer software product is run in the computer. A computer software product means in this context an independent computer or logic software or a part of a computer or logic software, which can comprise one or more program code elements. A program code element means an element, which comprises one or more instructions or commands readable by a computer. In this context a computer readable means refers to all such means, which permanently or temporarily can store information, instructions, commands, instruction or command sets or the like readable by a computer. Such means are for instance hard disks, mass memories, cache memories, diskettes, and CD ROM disks. In this context a computer means both programmable logics and micro computers. A micro computer can for instance be a standard PC, an industrial computer, a module micro assembled in a frame, a micro on one card, or a single circuit micro controller.

A typical computer software product mentioned above, which is stored on a computer readable means, comprises at least the following program code elements:
- a program code element for making the computer to receive and/or store information about the first cutting position and the following cutting positions; and
- a program code element for making the computer to control the aligning of the recess in the machining conveyor on the basis of the cutting position, while the computer software program runs in a computer.

The method according to the invention for controlling a machine tool can be used in a computer or as a part of some other device, which contains means for storing the computer software product, so that the method can be automated with the aid of the computer software product by utilising automatic data processing.

The greatest advantage of the machine tool and the method for controlling a machine tool according to the present invention is its simple operating principle, which facilitates a simple and durable structure of the machine tool. This provides savings in the manufacturing and maintenance costs of the machine tool.

The machine tool and the method for controlling a machine tool according to the present invention enables further a flexible and rapid cutting of an elongated object into pieces of desired size. Thus a great advantage of the machine tool and the method according to the invention is that the machine tool and the method can be used even in the cutting and removing of faults.

A machine tool and a method for controlling a machine tool according to the invention enables further the machine tool to be connected as a part of an external operation management system.

The invention is described in more detail below with reference to the enclosed drawing, in which
Figure 1 shows schematically and as an example a machine tool according to the invention seen from one side;
Figure 2 shows schematically and as an example a part of the machine tool according to the invention comprising the machining conveyor; and
Figure 3 shows as a flowchart an embodiment example of how to apply the method according to the invention.

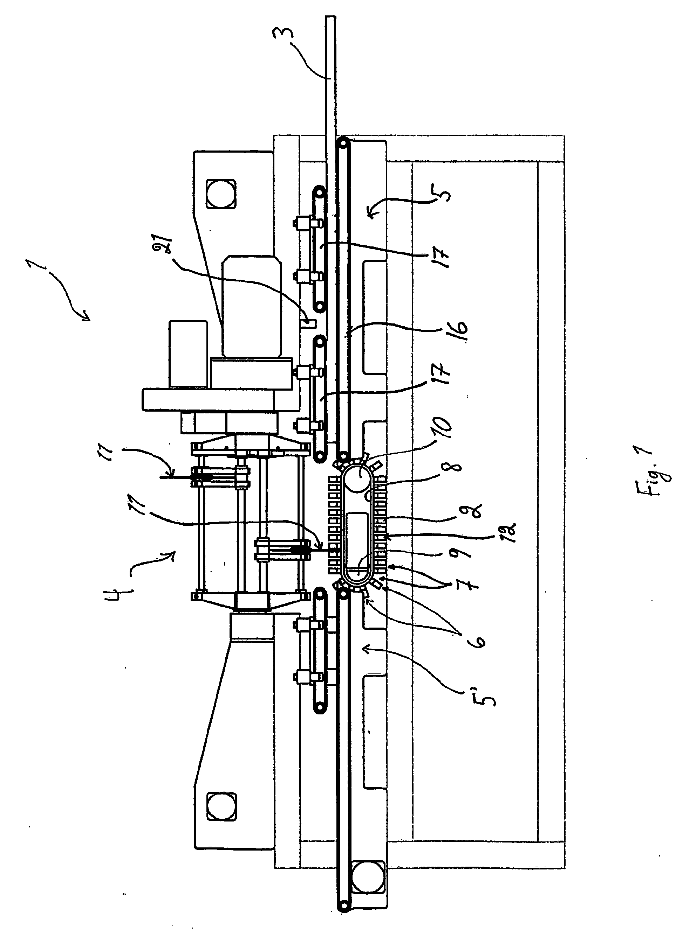

Figure 1 shows schematically and as an example an embodiment of the machine tool 1 according to the invention. The machine tool 1 is a sawing device, which is used to cut timber, such as boards, planks, lists or panels. The machine tool 1 comprises means for conveying the object to be machined, and a machining device comprising two machining blades for machining or cutting the elongated object. According to what is presented in the figure the means for conveying the machined object comprises one machining conveyor 2, which conveys the machined object 3 to the machining means 4, and a first transfer conveyor 5, which conveys the machined object 3 to the machining conveyor 2, and a second transfer conveyor 5', which conveys the machined object or pieces of it from the machining conveyor.

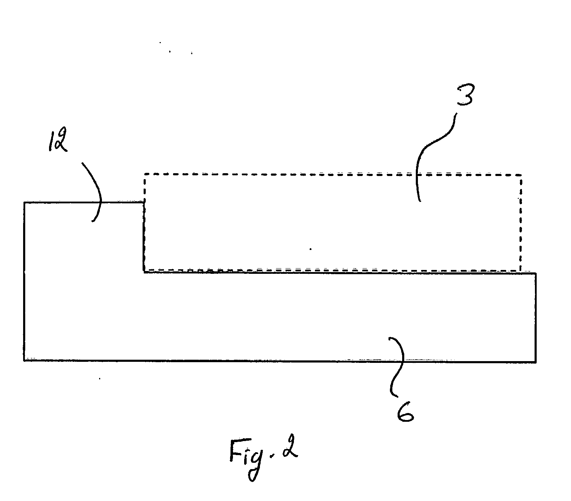

As shown in figures 1 and 2, the machining conveyor 2 is of the slot conveyor type, which comprises a number of parts 6 separated by slots 7 operating as recesses of the machining conveyor. The parts 6 are connected to each other by an unbroken, endless belt 8, which is arranged to rotate around cylindrical rolls 9 and 10. The parts 6 of the slot conveyor 2 support the object 3 to be machined. The machining blade 11 can be arranged to extend well below the machined object, or through the object, however so that the blade does not damage the endless belt, when the sawing of the machined object 3 on the parts 6 is commenced with the aid of the machining blade 11, and when one of the slots 7 of the slot conveyor is at the cutting position. Then the machining blade 11 cuts through the machined object 3 in a neat manner, as the machining blade partly extends into one of the slots 7. It is possible to realise the machining conveyor also in some other form than that described above. The essential thing is that the machining conveyor has a recess, such as a slot or gap, advantageously a plurality of slots and/or gaps, into which the machining means of the machine tool can extend. It is also possible to realise the recesses of the machining conveyor so that the recesses are machined with the machining means into the surface supporting the machined object before starting the actual production. Then the control system of the machine tool stores the position information of the recesses during the machining of the recesses, on the basis of which the position control of the machining conveyor's recesses can be realised during the actual production.

A stand 12 is located at edges of the parts 6 of the slot conveyor 2, so that the machined object 3 can be supported against the stand during the cutting. A good cutting result can be obtained as the stand 12 supports the object to be cut, even if the first transfer conveyor does not anymore support the object to be cut. As shown in the figure the machine tool comprises a second transfer conveyor 5', with which the machined object and/or the already cut pieces are conveyed forward from the machining conveyor and the machine tool, for instance to sorting, packaging or any further processing. The construction of the second transfer conveyor 5' corresponds to that of the first transfer conveyor 5, the construction of which is described in more detail later on. Of course it is also possible that the first and second transfer conveyors are of different construction and type. Further it is possible to realise the machining conveyor so that its conveying distance is so long that the object to be machined and the pieces from it can be moved with the aid of the machining conveyor to further processing.

A support surface may be arranged between the rolls 9 and 10 in order to support the belt 8 on that side where the machined object passes.

A servomotor (not shown in the figures) is coupled to the roll 9 in order to rotate the roll and thus in order to rotate the slot conveyor. The speed of rotation of the servomotor can be controlled, whereby the conveying speed of the slot conveyor can be controlled by controlling the rotational speed of the servomotor. The servomotor comprises a so-called absolute detector (pulse transducer), which accurately determines the position of the slot conveyor and thus of the slots in the slot conveyor. A further detector is connected to the roll 9 in order to secure the position of the roll and thus of the slots 7 in the slot conveyor. The detector is arranged to detect an identifier position on the roll 9, such as a projection arranged in the roll, which projection is located at a gap in the slot conveyor. The detector will also prevent the so-called drift in the absolute detector.

According to what is shown in the figure the first transfer conveyor 5 comprises a first belt conveyor 16 and second belt conveyors 17 arranged above the first belt conveyor 16, whereby the second conveyors are arranged to press the machined object 3 against the first belt conveyor 16 with a force of a desired magnitude, which advantageously can be adjusted. Instead of the second belt conveyor and/or instead of both belt conveyors it is possible to use for instance a wheel or a ski-like member, which could press the machined object against the first belt conveyor. The distance of the second belt conveyor 17 from the first belt conveyor 16 is adjusted to be suitable on the basis of the thickness of the machined object. A motor 18 is connected to the first belt conveyor 16 and to the second belt conveyor, and the rotational speed of this motor is controllable in order to control the conveying speed of the transfer conveyor.

The second belt conveyor 17 provides a hold, and due to this the transfer conveyor 5 can be used as the primary conveyor in controlling the conveying speed of the machined object. In other words, the conveying speed of the machined object is controlled with the transfer conveyor while the object is between the first and second belt conveyors. In addition the hold provided by the transfer conveyor prevents the machined object from moving with respect to the transfer conveyor, even if the conveying speed of the slot conveyor would be momentarily changed. Thus, it is possible to change the position of the slot conveyor and thus its slots with respect to the machined object by changing the rotational speed or the conveying speed of the slot conveyor.

The first transfer conveyor 5 comprises further a stop (not shown in the figure), which can be adjusted corresponding to the width of the machined object, and which can press the machined object transversally against a fixed stop. Said stops can secure that the machined object passes to the slot conveyor and to the machining means in the longitudinal direction of the machined object. A detector 21, such as a photocell, is further arranged in connection with the transfer conveyor 5, in order to detect the end of the machined object. A second detector (not shown in the figure) is further arranged in connection with the first transfer conveyor in order to detect the markings of the cutting positions. The control of the rotational speed of the second transfer conveyor can be interconnected with the control of the first transfer conveyor, or it can be realised independently. However, it is preferred that the rotational speed or the conveying speed of the second transfer conveyor at least equals the conveying speed of the machining conveyor, so that machined pieces can not accumulate between the machining conveyor and the second transfer conveyor.

The machining means 4 comprises two machining blades 11, as presented above. The machining means can also comprise only one blade, or more than two blades. The structure and the operation of the machining means is not presented in more detail here, as machine tools known as such can be used as a machining means, such as a sawing device presented in the patent publication WO98/13165.

The machine tool comprises further a control unit (not shown in the figures), which in a manner known as such is connected to the detectors and actuators of the machine tool. The control unit is arranged to receive measurement information from the detectors and to receive information about the rotational speed of the power units and to control the operation of the power units, for instance particularly the rotational speed. The machine tool further comprises means for connecting the machine tool in a manner known as such to one or more systems external to the machine tool, such as to a production control system.

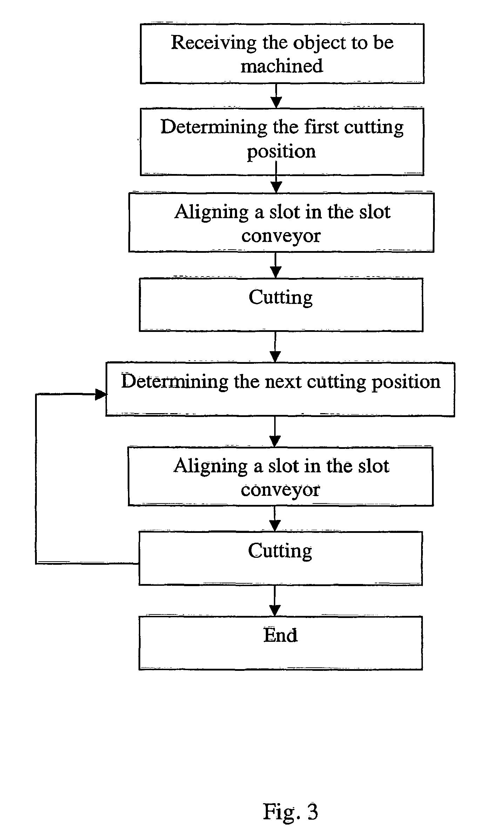

Figure 3 shows as a flow chart an embodiment example of how the method and a computer software product according to the invention are used to control a sawing device, where the sawing device is of a type where the sawing is performed without stopping the object to be machined. The control can be realised with the aid of control performed by a computer or logic program or by a servo-controller. The first cutting position is determined when the object to be machined has been received to the transfer conveyor and put into hold. The first cutting position can be determined, depending on the cutting operation at hand, either based on the detection of the end of the machined object or on the detection of the cutting position. When the cutting position has been determined the position of the slot conveyor is guided so that one of the slots in the slot conveyor is located below the cutting position as the machined object arrives to the slot conveyor from the transfer conveyor. The control of the slot conveyor is based on information regarding the conveying speed of the transfer conveyor, on information about the position of the slots in the slot conveyor, and on information regarding the conveying speed of the slot conveyor. The conveying speed of the slot conveyor is momentarily accelerated so that the position of the slot conveyor is changed, in other words so that the slots are moved in relation to the object to be machined. The position of the slot conveyor can be changed with respect to the machined object also for instance by decreasing the conveying speed of the feeding conveyor, as was mentioned above. The information about the position of the slots is obtained on the basis of measurement information provided by a detector installed in the slot conveyor and on the basis of basic information entered into the system, such as the width of the components of the slot conveyor and the distance between the components, i.e. the width of the slots. When a slot of the slot conveyor has been positioned the conveying speed of the slot conveyor is reduced to equal the conveying speed of the transfer conveyor. The cutting is performed when the machined object has travelled on the slot conveyor and arrives at the machining area of the machining means, i.e. the cutting blade, so that the blade is accelerated to the starting position, and the cutting is made by rotating the blade. The next cutting position is determined immediately after the cutting, i.e. immediately as the blade has been removed from the position in front of the machined object. The determination is based either on information about the first cutting position or about the previous cutting position, or it can be based on the determination of the cutting position, depending on the cutting operation in use.

Then one of the slots in the slot conveyor is positioned at the cutting position, and the cutting is performed in the manner described above. This operation continues until the object to be machined has been processed, whereby the cutting is finished and the process waits for the next object to be machined. When the machined object has long distances between the machining positions it is also possible to control the conveyors in some applications so that the conveying speed of the conveyors is momentarily accelerated. This increases the production capacity and the machining speed.

If the basic function of the machine tool is of that kind where the object to be machined is stopped for the cutting, then the function scheme described above would include the stopping of the slot conveyor and the transfer conveyor when the cutting position reaches the machining area of the cutting device, and correspondingly the starting of the slot conveyor and the transfer conveyor after the cutting.

The cutting operation mentioned above can be fixed size cutting, list cutting, mark cutting, cutting to remove faults, or optimised cutting. In the fixed size cutting the machine tool is provided with the length of the first cut and the fixed length in order to cut as many pieces as possible with this fixed length from the object to be machined. In list cutting the machine tool is provided with any first cut length and the fixed list lengths, of which there are advantageously an optional number. Then the object to be machined can be cut into pieces with desired lengths, which may be of different size. In mark cutting the cutting positions are marked on the object to be machined, for instance as fluorine lines, which a detector in the machine tool will detect. In the cutting to remove faults the machine tools receives the data about the cutting position, for instance from fault detection equipment external to the machine tool or from the production control system. Typical cutting to remove faults is the removal of a branch or any other faulty point from the object to be machined. In optimised cutting the machine tool receives, in the same manner as in cutting to remove faults, the cutting positions from a system external to the machine tool, for instance from optimising reading equipment or from the production planning system.

Our aim is not to restrict the invention to the embodiments presented above as examples, but on the contrary it should be interpreted widely within the scope defined in the claims presented below.

## Claims

1. A machine tool (1) comprising means for conveying an object to be machined and at least one machining means for machining the object, the means for conveying the object to be machined comprising at least one machining conveyor (2), with which the object (3) to be machined is conveyed to the machining means (4), which machining conveyor comprises at least one recess arranged to act as the machining position, **characterised in that** the means for conveying the object to be machined comprises at least one transfer conveyor (5), with which the object (3) to be machined is conveyed to the machining conveyor (2), and that the position of the recess in the machining conveyor (2) with respect to the object (3) to be machined is arranged to be controlled by controlling the conveying speed of the machining conveyor (2) and/or the transfer conveyor (5).

2. A machine tool according to claim 1, **characterised in that** the machining means (4) is a sawing device, which comprises one or more cutting blades (11).

3. A machine tool according to claim 1 or 2, **characterised in that** the machining means (4) is arranged to be moved back and forth in the longitudinal direction of the object (3) to be machined, in order to machine the object during the conveying.

4. A machine tool according to any previous claim 1 to 3, **characterised in that** the position of the machining conveyor (2) with respect to the object (3) to be machined is arranged to be controlled by momentarily increasing the conveying speed of the machining conveyor (2) and/or by momentarily reducing the conveying speed of the transfer conveyor (5).

5. A machine tool according to any previous claim, **characterised in that** the transfer conveyor (5) is arranged to support the object (3) to be machined from at least two mutually opposite sides.

6. A machine tool according to any previous claim, **characterised in that** at least one detector (16) is arranged in connection with the machining conveyor (2) in order to determine the position of the machining conveyor (2).

7. A machine tool according to any previous claim, **characterised in that** the machine tool (1) comprises means (21, 22) in order to determine at least one machining position on the object to be machined and/or in order to receive information about the machining position regarding the object to be machined.

8. A machine tool according to any previous claim, **characterised in that** the machine tool (1) comprises means for controlling the speed of the machining conveyor (2) and/or the transfer conveyor (5) on the basis of the information about the cutting position.

9. A method for controlling a machine tool comprising means for conveying an object to be machined and at least one machining means for machining the object, the method utilising as means for conveying the object to be machined at least one machining conveyor (2), with which the object (3) to be machined is conveyed to the machining means (4), which machining conveyor comprises at least one recess arranged to act as the machining position, **characterised in that** as means for conveying the object to be machined the method utilises at least one transfer conveyor (5), with which the object (3) to be machined is conveyed to the machining conveyor (2), and that the position of the recess in the machining conveyor (2) with respect to the object (3) to be machined is arranged to be controlled by controlling the conveying speed of the machining conveyor (2) and/or the transfer conveyor (5).

10. A method according to claim 9, **characterised in that** the position of the machining conveyor (2) with respect to the object (3) to be machined is controlled on the basis of the machining position on the object (3) to be machined, so that the recess (7) of the machining conveyor (2) is located at the machining position of the object to be machined as the machining position is passing to the machining conveyor (2).

11. A method according to claim 9 or 10, **characterised in that** the object (3) to be machined is supported by the transfer conveyor (5) at least on two mutually opposite sides, and that the transfer conveyor (5) primarily determines the conveying speed of the object (3) to be machined.

12. A method according to any previous claim 9 to 10, **characterised in that** the conveying speed of the machining conveyor (2) is momentarily accelerated after the machining procedure in order to align the recess (7) in the machining conveyor (2) on the basis of the next machining position.

## Patentansprüche

1. Werkzeugmaschine (1), die eine Einrichtung zum Befördern eines zu bearbeitenden Objekts und zumindest eine Bearbeitungseinrichtung zum Bearbeiten des Objekts aufweist, wobei die Einrichtung zum Befördern des zu bearbeitenden Objekts zumindest einen Bearbeitungsförderer (2) aufweist, mit dem das zu bearbeitende Objekt (3) zu der Bearbeitungseinrichtung (4) befördert wird, wobei der Bearbeitungsförderer zumindest eine Vertiefung aufweist, die angeordnet ist, als Bearbeitungsposition zu wirken, **dadurch gekennzeichnet, dass** die Einrichtung zum Befördern des zu bearbeitenden Objekts zumindest einen Übergabeförderer (5) aufweist, mit dem das zu bearbeitende Objekt (3) zu dem Bearbeitungsförderer (2) befördert wird, und dass die Position der Vertiefung im Bearbeitungsförderer (2) gegenüber dem zu bearbeitenden Objekt (3) angeordnet ist, gesteuert zu werden, indem die Beförderungsgeschwindigkeit des Bearbeitungsförderers (2) und/oder des Übergabeförderers (5) gesteuert wird.

2. Werkzeugmaschine nach Anspruch 1, **dadurch gekennzeichnet, dass** die Bearbeitungseinrichtung (4) eine Sägevorrichtung ist, die eines oder mehrere Schneidblätter (11) aufweist.

3. Werkzeugmaschine nach Anspruch 1 oder 2, **dadurch gekennzeichnet, dass** die Bearbeitungseinrichtung (4) angeordnet ist, in der Längsrichtung des zu bearbeitenden Objekts (3) vor und zurück bewegt zu werden, um das Objekt während des Beförderns zu bearbeiten.

4. Werkzeugmaschine nach einem der vorhergehenden Ansprüche 1 bis 3, **dadurch gekennzeichnet, dass** die Position des Bearbeitungsförderers (2) gegenüber dem zu bearbeitenden Objekt (3) angeordnet ist, gesteuert zu werden, indem vorübergehend die Beförderungsgeschwindigkeit des Bearbeitungsförderers (2) erhöht und/oder vorübergehend die Beförderungsgeschwindigkeit des Übergabeförderers (5) verringert wird.

5. Werkzeugmaschine nach einem der vorhergehenden Ansprüche, **dadurch gekennzeichnet, dass** der Übergabeförderer (5) angeordnet ist, das zu bearbeitende Objekt (3) von zumindest zwei einander gegenüberliegenden Seiten zu stützen.

6. Werkzeugmaschine nach einem der vorhergehenden Ansprüche, **dadurch gekennzeichnet, dass** zumindest ein Detektor (16) in Verbindung mit dem Bearbeitungsförderer (2) angeordnet ist, um die Position des Bearbeitungsförderers (2) zu bestimmen.

7. Werkzeugmaschine nach einem der vorhergehenden Ansprüche, **dadurch gekennzeichnet, dass** die Werkzeugmaschine (1) Mittel (21, 22) aufweist, um zumindest eine Bearbeitungsposition auf dem zu bearbeitenden Objekt zu bestimmen und/oder Informationen über die Bearbeitungsposition bezüglich des zu bearbeitenden Objekts zu erhalten.

8. Werkzeugmaschine nach einem der vorhergehenden Ansprüche, **dadurch gekennzeichnet, dass** die Werkzeugmaschine (1) Mittel zum Steuern der Geschwindigkeit des Bearbeitungsförderers (2) und/oder des Übergabeförderers (5) auf der Grundlage der Informationen über die Schneideposition aufweist.

9. Verfahren zum Steuern einer Werkzeugmaschine, die eine Einrichtung zum Befördern eines zu bearbeitenden Objekts und zumindest eine Bearbeitungseinrichtung zum Bearbeiten des Objekts aufweist, wobei das Verfahren als Einrichtung zum Befördern des zu bearbeitenden Objekts zumindest einen Bearbeitungsförderer (2) nutzt, mit dem das zu bearbeitende Objekt (3) zur Bearbeitungseinrichtung (4) befördert wird, wobei der Bearbeitungsförderer zumindest eine Vertiefung aufweist, die angeordnet ist, als Bearbeitungsposition zu wirken, **dadurch gekennzeichnet, dass** das Verfahren als Einrichtung zum Befördern des zu bearbeitenden Objekts zumindest einen Übergabeförderer (5) nutzt, mit dem das zu bearbeitende Objekt (3) zu dem Bearbeitungsförderer (2) befördert wird, und dass die Position der Vertiefung im Bearbeitungsförderer (2) gegenüber dem zu bearbeitenden Objekt (3) angeordnet ist, gesteuert zu werden, indem die Beförderungsgeschwindigkeit des Bearbeitungsförderers (2) und/oder des Übergabeförderers (5) gesteuert wird.

10. Verfahren nach Anspruch 9, **dadurch gekennzeichnet, dass** die Position des Bearbeitungsförderers (2) gegenüber dem zu bearbeitenden Objekt (3) auf der Grundlage der Bearbeitungsposition auf dem zu bearbeitenden Objekt (3) gesteuert wird, sodass sich die Vertiefung (7) des Bearbeitungsförderers (2) an der Bearbeitungsposition des zu bearbeitenden Objekts befindet, wenn sich die Bearbeitungsposition zum Bearbeitungsförderer (2) bewegt.

11. Verfahren nach Anspruch 9 oder 10, **dadurch gekennzeichnet, dass** das zu bearbeitende Objekt (3) durch den Übergabeförderer (5) auf zumindest zwei einander gegenüberliegenden Seiten gestützt wird, und dass der Übergabeförderer (5) primär die Beförderungsgeschwindigkeit des zu bearbeitenden Objekts (3) bestimmt.

12. Verfahren nach der vorhergehenden Anspruch 9 oder 10, **dadurch gekennzeichnet, dass** die Beförderungsgeschwindigkeit des Bearbeitungsförderers (2) nach dem Bearbeitungsvorgang vorübergehend beschleunigt wird, um die Vertiefung (7) im Bearbeitungsförderer (2) auf der Grundlage der nächsten Bearbeitungsposition auszurichten.

## Revendications

1. Machine-outil (1) comprenant des moyens servant à acheminer un objet à usiner et au moins un moyen d'usinage permettant d'usiner l'objet, les moyens servant à acheminer l'objet à usiner comportant au moins un transporteur d'usinage (2), au moyen duquel l'objet (3) à usiner est acheminé vers le moyen d'usinage (4), lequel transporteur d'usinage comprend au moins un évidement agencé pour agir en tant que la position d'usinage, **caractérisée en ce que** les moyens servant à acheminer l'objet à usiner comprennent au moins un transporteur de transfert (5) par lequel l'objet (3) à usiner est acheminé vers le transporteur d'usinage (2), et **en ce que** la position de l'évidement dans le transporteur d'usinage (2) par rapport à l'objet (3) à usiner est agencé en vue d'être commandé en commandant la vitesse d'acheminement du transporteur d'usinage (2) et/ou du transporteur de transfert (5).

2. Machine-outil selon la revendication 1, **caractérisée en ce que** le moyen d'usinage (4) est un dispositif de sciage, lequel comprend une ou plusieurs lame(s) de coupe (11).

3. Machine-outil selon la revendication 1 ou 2, **caractérisée en ce que** le moyen d'usinage (4) est agencé de façon à être déplacé en va et vient dans la direction longitudinale de l'objet (3) à usiner, afin d'usiner l'objet pendant le transport.

4. Machine-outil selon l'une quelconque des revendications précédentes 1 à 3, **caractérisée en ce que** la position du transporteur d'usinage (2) par rapport à l'objet (3) à usiner est agencée afin d'être commandée par l'accroissement temporaire de la vitesse d'acheminement du transporteur d'usinage (2) et/ou par la réduction temporaire de la vitesse d'acheminement du transporteur de transfert (5).

5. Machine-outil selon l'une quelconque des revendications précédentes, **caractérisée en ce que** le transporteur de transfert (5) est agencé pour supporter l'objet (3) à usiner à partir d'au moins deux côtés opposés mutuellement.

6. Machine-outil selon l'une quelconque des revendications précédentes, **caractérisée en ce qu'**au moins un détecteur (16) est agencé en liaison avec le transporteur d'usinage (2) afin de déterminer la position du transporteur d'usinage (2).

7. Machine-outil selon l'une quelconque des revendications précédentes, **caractérisée en ce que** la machine-outil (1) comprend des moyens (21, 22) afin de déterminer au moins une position d'usinage sur l'objet à usiner et/ou afin de recevoir d'information au sujet de la position d'usinage concernant l'objet à usiner.

8. Machine-outil selon l'une quelconque des revendications précédentes, **caractérisée en ce que** la machine-outil (1) comprend des moyens pour commander la vitesse du transporteur d'usinage (2) et/ou du transporteur de transfert (5) sur la base de l'information concernant la position de coupe.

9. Procédé permettant de commander une machine-outil comprenant des moyens servant à acheminer un objet à usiner et au moins un moyen d'usinage pour usiner l'objet, le procédé utilisant comme moyens permettant d'acheminer l'objet à usiner au moins un transporteur d'usinage (2), par l'intermédiaire duquel l'objet (3) à usiner est acheminé vers les moyens d'usinage (4), lequel transporteur d'usinage comprend au moins un évidement agencé pour agir en tant que la position d'usinage, **caractérisé en ce que,** comme moyen servant à acheminer l'objet à usiner le procédé utilise au moins un transporteur de transfert (5), au moyen duquel l'objet (3) à usiner est acheminé vers le transporteur d'usinage (2), et **en ce que** la position de l'évidement dans le transporteur d'usinage (2) par rapport à l'objet (3) à usiner est agencée en vue d'être commandée par la commande de la vitesse d'acheminement du transporteur d'usinage (2) et/ou du transporteur de transfert (5).

10. Procédé selon la revendication 9, **caractérisé en ce que** la position du transporteur d'usinage (2) par rapport à l'objet (3) à usiner est commandée sur la base de la position d'usinage sur l'objet (3) à usiner, de sorte que l'évidement (7) du transporteur d'usinage (2) est placé au niveau de la position d'usinage de l'objet à usiner lorsque la position d'usinage passe vers le transportur d'usinage (2).

11. Procédé selon la revendication 9 ou 10, **caractérisé en ce que** l'objet (3) à usiner est supporté par le transporteur de transfert (5) au moins sur deux côtés mutuellement opposés, et **en ce que** le transporteur de transfert (5) détermine principalement la vitesse d'acheminement de l'objet (3) à usiner.

12. Procédé selon l'une quelconque des revendications précédentes 9 à 10, **caractérisé en ce que** la vitesse d'acheminement du transporteur d'usinage (2) est accélérée de façon temporaire après la procédure d'usinage afin d'aligner l'évidement (7) dans le transporteur d'usinage (2) sur la base de la position d'usinage suivante.
